# EUROPEAN PATENT APPLICATION

(11) **EP 3 016 098 A2**
(43) Date of publication of application: **04.05.2016**
(21) Application number: 15190276.4
(22) Date of filing: 16.10.2015
(51) Int. Cl.: G09G 5/00

(54) **DISPLAY APPARATUS AND METHOD OF CONTROLLING THE SAME**

(30) Priority: 30.10.2014 KR 20140149414
(71) Applicant: Samsung Electronics Co., Ltd., Gyeonggi-do 16677 (KR)
(72) Inventor: KIM, Sang-won, Gyeonggi-do (KR)
(74) Representative: Taor, Simon Edward William

(57) **Abstract**

A display apparatus which selects curved degree and changes a curvature and a control method thereof are provided. The display apparatus includes a flexible display, a deformer coupled to a rear of the display, a driver configured to drive the deformer to vary a curvature of the display, and a controller configured to display a user interface (UI) including a menu for selecting degree of curvature of the display in the display, and to control the driver to correspond to the degree of curvature of the display selected in the menu.

## Description

Disclosed apparatuses and methods relate to a display apparatus and a method of controlling the same, and for example, to a display apparatus which provides an option for a plurality of curvatures to a user and a method of controlling the same.

Due to the development of the information-oriented society, demands on display apparatuses have been increased in various types. In recent years, to meet the demands on the display apparatuses, various display apparatuses such as a liquid crystal display (LCD), a plasma display panel (PDP), an electro luminescent display (ELD), or a vacuum fluorescent display (VFD) have been studied and used.

Among the display apparatuses, flexible display apparatuses, which are not damaged even when the display apparatuses are folded or rolled, are expected to emerge as new technology in display fields. Currently, there are various obstacles in implementing the flexible display apparatuses, but technology for implementing thin film transistor (TFT)-LCDs, organic light emitting diodes (OLEDs), electrophoresis, and the like as the flexible display have been developed.

In recent years, in general flexible display apparatuses, a structure having a curvature capable of improving image quality by improving a viewing angle felt by a viewer and increasing immersion through bending both edges of the flexible display apparatus to a viewer direction has been suggested.

However, the flexible display apparatuses provide only two modes, that is, a flat mode and a curved mode, and the user has no option for varying a curvature mode.

Example embodiments may overcome the above disadvantages and other disadvantages not described above.

One or more example embodiments relate to a display apparatus which provides a user interface (UI) including a menu for selecting degree of curvature a display.

According to an aspect of an example embodiment, a display apparatus is provided including a flexible display; a deformer coupled to a rear of the display; a driver configured to drive the deformer to vary a curvature of the display; and a controller configured to display a user interface (UI) including a menu for selecting a degree of curvature of the display in the display, and to control the driver to correspond to the degree of curvature of the display selected in the menu.

The menu may include a curvature selection menu for selecting one of a plurality of preset curvature values.

The menu may further include a position selection menu for selecting a portion of the display to be curved.

The display apparatus may further include a front sensor configured to detect a distance to a viewer from the display. The menu may further include an optimum curvature menu which displays a curvature value determined through the controller based on the distance detected through the front sensor, and at least one curvature value closest to the determined curvature value among the plurality of preset curvature values displayed through the curvature selection menu.

The display apparatus may further include a rear sensor configured to detect a moving distance of the deformer. The controller may be configured to compare the moving distance of the deformer detected through the rear sensor with a preset moving distance corresponding to the curvature value selected through the curvature selection menu and to control the driver to stop a movement of the deformer in response to the detected moving distance being equal to the preset moving distance.

The deformer may include a first deformation member and a second deformation member. The rear sensor may include a first sensor configured to detect a moving distance of the first deformation member and a second sensor configured to detect a moving distance of the second deformation member.

The menu may further include a position selection menu for selecting a portion of the display to be curved. The controller may be configured to deform a curvature for the portion of the display selected through the position selection menu.

In response to a power-off command being input, the controller may be configured to store curvature information of the display at the time of the input of the power-off command, and the controller may control the driver to move the deformer until the display is flat.

In response to a power-on command being input, the controller may be configured to control the driver so that the display is curved based on the curvature information stored at the time of the input of the power-off command.

The curvature information may include a curvedly deformed region of the display and a curvature value for the region.

The curvature selection menu may display all the plurality of preset curvature values.

The curvature selection menu may include a slide bar image; an adjustment knob image which moves along the slide bar image; and a curvature indicator which displays a curvature value corresponding to a position of the adjustment knob image among the plurality of preset curvature values according to a movement of the adjustment knob image along the slide bar image.

The slide bar image may be arranged in a vertical direction or a horizontal direction.

According to an aspect of an example embodiment, a method of controlling a curvature of a display apparatus is provided, the method including displaying a curvature selection menu for selecting one of a plurality of preset curvature values to select degree of curvature of a display; selecting any one of the plurality of preset curvature values through the curvature selection menu; and changing a curvature of the display to correspond to the curvature value selected through the curvature selection menu.

The method may further include displaying a position selection menu for selecting a portion of the display to be curved.

The method may further include, before the displaying of the curvature selection menu, detecting a distance from the display to a viewer; determining a curvature value of the display based on the detected distance from the display to the viewer; and displaying at least one curvature value closest to the determined curvature value among the plurality of preset curvature values displayed through the curvature selection menu.

The changing of the curvature of the display may include moving a deformer configured to deform the curvature of the display through a driver so that the display has the selected curvature value; detecting a moving distance of the deformer; and comparing the detected moving distance of the deformer with a preset moving distance corresponding to the curvature value selected through the curvature selection menu and stopping a movement of the deformer in response to the detected moving distance being equal to the preset moving distance.

The method may further include, in response to a power-off command being input after the changing of the curvature of the display, storing curvature information for the curved degree of the display at the time of the power-off command; and moving a deformer through a driver so that the display is flat.

The method may further include, in response to a power-on command being input after the moving of the deformer so that the display is flat, moving the deformer through the driver so that the display is curved based on the curvature information stored at the time of the input of the power-off command.

Additional aspects and advantages of the example embodiments are set forth in the detailed description, and will be apparent from the detailed description.

The above and/or other aspects and advantages will become more apparent from the following detailed description taken in conjunction with the accompanying drawings, in which like reference numerals refer to like elements, and wherein:
FIG. 1 is a rear view schematically illustrating a display apparatus according to an example embodiment;
FIG. 2 is a plan view illustrating the display apparatus illustrated in FIG. 1;
FIGS. 3 to 9 are diagrams illustrating a method of controlling a display in the display apparatus illustrated in FIG. 1;
FIG. 10 is a diagram illustrating a look-up table representing curvature values corresponding to reference values by a rear sensor illustrated in FIG. 1;
FIG. 11 is a plan view illustrating an example in which a left side of a display is curved in the display apparatus illustrated in FIG. 1;
FIG. 12 is a plan view illustrating an example in which a right side of a display is curved in the display apparatus illustrated in FIG. 1;
FIG. 13 is a plan view illustrating an example in which both sides of a display are curved in the display apparatus illustrated in FIG. 1;
FIG. 14 is a diagram illustrating a control method of a display in a display apparatus based on a power-off command or a power-on command according to an example embodiment;
FIG. 15 is a flowchart illustrating a method of controlling the display apparatus illustrated in FIG. 1 according to an example embodiment; and
FIG. 16 is a flowchart illustrating a method of controlling a display apparatus based on a power-off command or a power-on command according to an example embodiment.

Example embodiments are described in greater detail with reference to the accompanying drawings below.

The example embodiments of the disclosure may be diversely modified. Accordingly, example embodiments are illustrated in the drawings and are described in detail in the detailed description. However, it is to be understood that the disclosure is not limited to a specific example embodiment, but includes all modifications, equivalents, and substitutions without departing from the scope of the disclosure. Also, well-known functions or constructions are not described in detail since they might obscure the disclosure with unnecessary detail. Further, dimensions of various elements in the accompanying drawings may be arbitrarily increased or decreased.

The terms used in the present application are only used to describe the example embodiments, but are not intended to limit the scope of the disclosure. The singular expression also includes the plural meaning as long as it does not conflict with the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

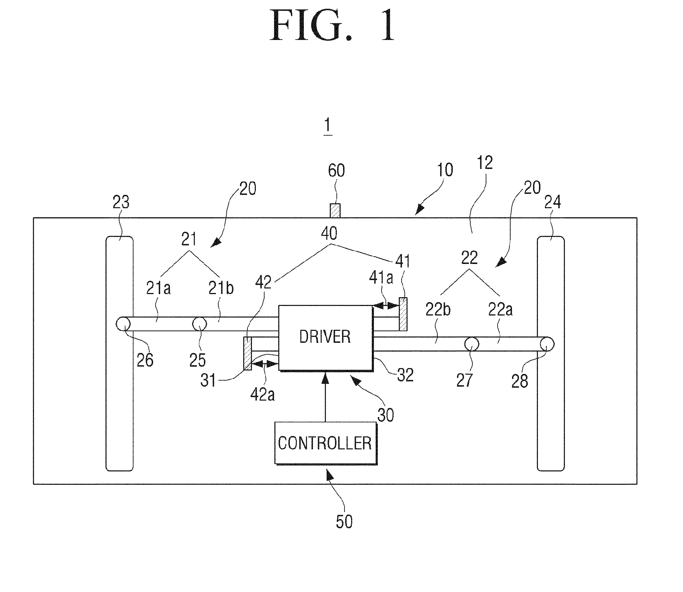

FIG. 1 is a diagram schematically illustrating a display apparatus 1 according to an example embodiment. Referring to FIG. 1, the display apparatus 1 may be configured such that at least one side or both sides of a display 10 may be curved in a direction directed, for example, to the user (that is, a viewer) based on the movement of a deformer 20 coupled to a rear surface of the display 10 by a driver 30 which may, for example, be controlled through a controller 50. Deformer, as used herein, is an electro-mechanical apparatus coupled to the display and configured to adjust a curvature of a flexible display. Articulating arms of the deformer are associated with a driver which, under the control of the controller causes the arms to move and thereby control an amount of curvature of the display.

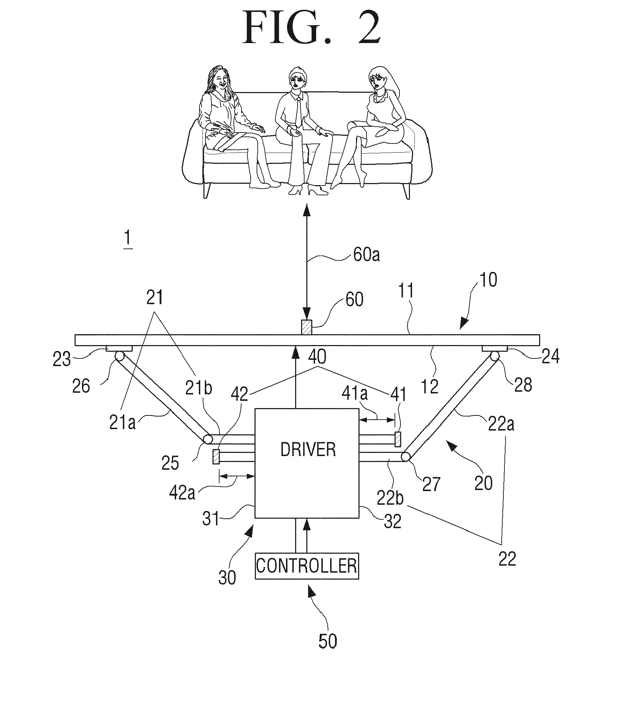

Referring to FIGS. 1 and 2, the display apparatus 1 may include a display 10, a deformer 20, a driver 30, a rear sensor 40, a front sensor 60, and a controller 50. The display apparatus 1 may, for example, be a smart television (TV). The display apparatus 1 may be implemented with various display apparatuses such as a projection TV, a desktop TV, or a laptop personal computer (PC), etc.

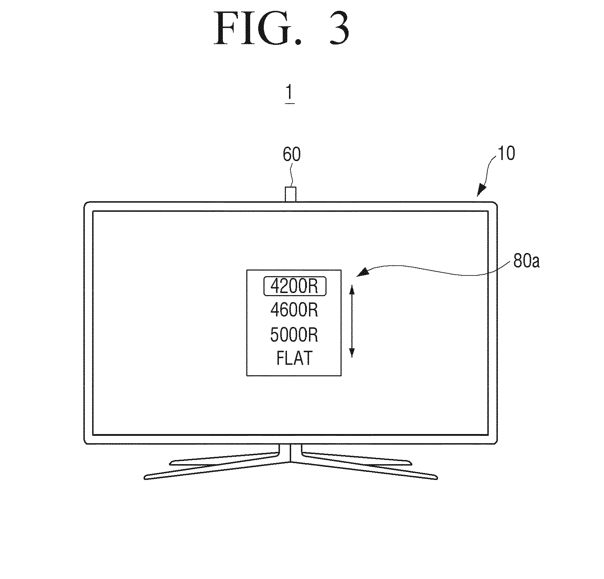

Referring to FIGS. 3 to 9, the display 10 may display image content input from various sources based on control of the controller 50. In response to a start command for causing the display 10 to be curved being input by the user located in a certain distance from the display 10, the display 10 may display a user interface (UI) which includes a menu for selecting degree of curvature of the display 10.

For example, the display 10 may display UIs which include curvature selection menus 80a, 80b, 80c, and 80d for selecting one among a plurality of preset curvature values so as to select the degree of curvature of the display 10. The user may variously adjust the curvature of the display 10 in addition to the selecting of the flat state or the curved state of the display 10. Further, the user may comfortably immerse himself/herself in viewing without movement.

The display 10 may display a UI which further includes a position selection menu 70 for selecting a position of the display 10 to, for example, be curved so as to cause at least one part of the display 10, that is, at least one side of both sides of the display 10 to be curved. The display 10 may display a UI further including an optimum curvature menu 90 which displays a curvature value determined based on the distance from the display 10 to the user (that is, the viewer), and at least one curvature value closest to the curvature value determined through the controller 50 among the plurality of preset curvature values displayed through the curvature selection menus 80a, 80b, 80c, and 80d. The display 10 may display the optimum curvature menu 90 to be located, for example, near any one of four corners of a screen of the display 10.

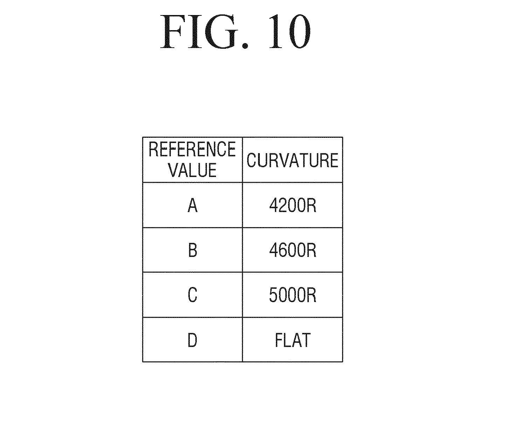

Referring to FIG. 10, a look-up table which includes various curvature values selectable by the user through the display apparatus 1 may, for example, represent reference values based on measurement in a distance between the rear sensor 40 and the driver and curvature values corresponding to the reference values. The curvature values displayed in the curvature selection menus 80a, 80b, 80c, and 80d may include at least a portion among a plurality of curvature values represented in the look-up table.

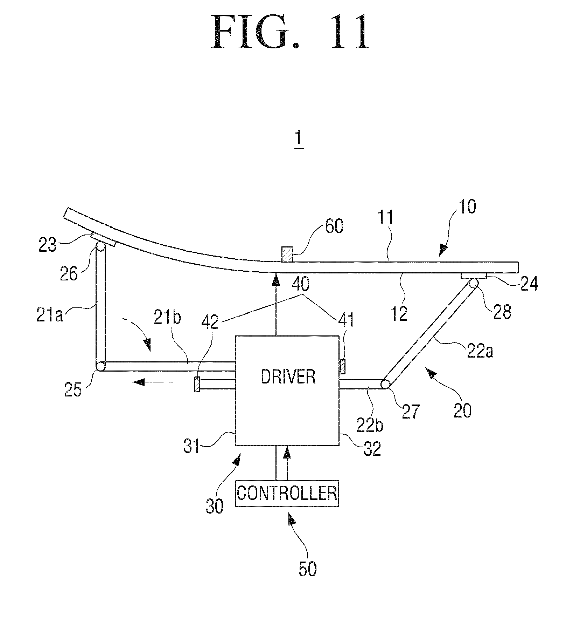

Referring to FIGS. 11 to 13, the deformer 20 may have an end rotatably coupled to a rear surface 12 of the display 10 and may deform the display 10. The deformer 20 may include a first deformation member 21 and a second deformation member 22. The deformer 20 may further include a first frame 23 and a second frame 24 fixed to the rear surface 12 of the display 10.

Referring to FIG. 11, the first deformation member 21 may be disposed on the left side of the display apparatus 1 and may cause the left side of the display 10 to be curved.

The first deformation member 21 may include a first rotation member 21a and a first horizontal member 21b. One end of the first rotation member 21a may be coupled to the first frame 23 attached to the rear surface 12 of the display 10 by a second hinge 26, and the other end of the first rotation member 21a may be coupled to one end of the first horizontal member 21b by a first hinge 25. The first horizontal member 21b may be disposed to pass through the driver 30 in a longitudinal direction of the display 10, and a first sensor 41 may be installed at the other end of the first horizontal member 21b. The first horizontal member 21b may pass through the driver 30 in the longitudinal direction of the display 10 to perform a reciprocal movement motion through the driver 30. In response to the first horizontal member 21b being moved to the left direction in FIG. 11, the first rotation member 21a of which the one end is hinge-coupled to the first frame 23 may rotate to a clockwise direction on the basis of the first hinge 25 of the first horizontal member 21b and simultaneously press the left side of the display 10 toward a user side through the first frame 23 attached to the rear surface 12 of the display 10. The central portion of the display 10 may be fixed to the display apparatus 1 so as to maintain a certain distance from the driver 30. Accordingly, the left side of the display 10 may be curved toward the user side.

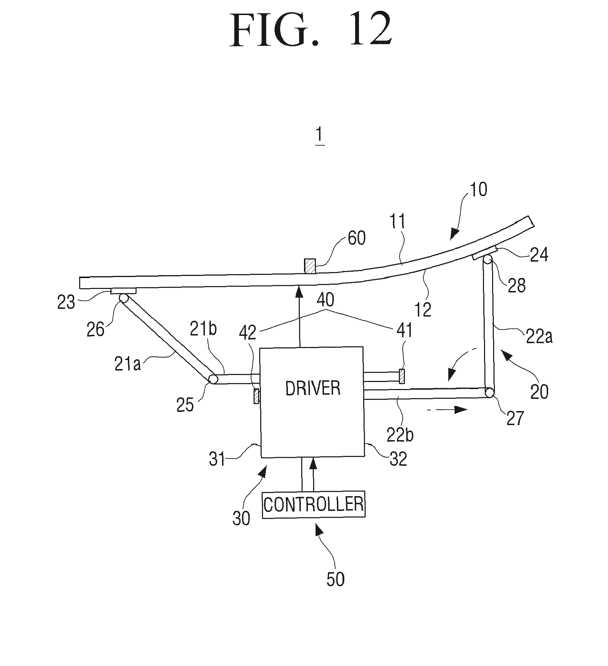

Referring to FIG. 12, the second deformation member 22 may be disposed on the right side of the display apparatus 1 and may cause the right side of the display 10 to be curved.

The second deformation member 22 may include a second rotation member 22a and a second horizontal member 22b like the first deformation member 21. One end of the second rotation member 22a may be coupled to the second frame 24 attached to the rear surface 12 of the display 10 by a fourth hinge 28, and the other end of the second rotation member 22a may be coupled to one end of the second horizontal member 22b by a third hinge 27. The second horizontal member 22b may be disposed to pass through the driver 30 in the longitudinal direction of the display 10, and a second sensor 42 may be installed at the other end of the second horizontal member 22b. The second horizontal member 22b may pass through the driver 30 in the longitudinal direction of the display 10 to perform a reciprocal movement motion through the driver 30. In response to the second horizontal member 22b being moved to the right direction in FIG. 12, the second rotation member 22a of which the one end is hinge-coupled to the second frame 24 may rotate to a counterclockwise direction on the basis of the third hinge 27 of the second horizontal member 22b and simultaneously press the right side of the display 10 toward the user side through the second frame 24 attached to the rear surface 12 of the display 10. The central portion of the display 10 may be fixed to the display apparatus 1 so as to maintain a certain distance from the driver 30. Accordingly, the right side of the display 10 may be curved toward the user side.

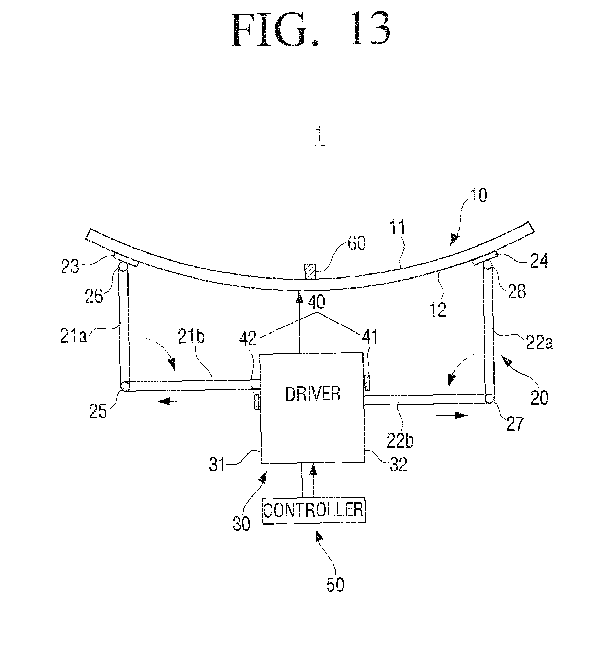

Referring to FIG. 13, in response to the first deformation member 21 being moved to the left side and the second deformation member 22 being moved to the right side, the first and second deformation members 21 and 22 may cause both sides of the display 10 to be curved toward the user side, and thus the entire display 10 may have the certain curvature.

The driver 30 may drive the deformer 20 coupled to the rear surface 12 of the display 10 to vary the curvature of the display 10. For example, the controller 50 may be configured to reciprocally move the first and second horizontal members 21b and 22b of the deformer 20 in the longitudinal direction of the display 10. The first and second horizontal members 21b and 22b may be disposed to pass through the driver 30, and the driver 30 may independently move the first and the second horizontal members 21b and 22b passing therethrough in the longitudinal direction of the display 10 through a motor (not shown) installed inside thereof.

The rear sensor 40 may be disposed in the deformer 20 to measure a moving distance of a part of the deformer 20. For example, the rear sensor 40 may include the first sensor 41 and the second sensor 42. The first sensor 41 may be disposed at the other end of the first horizontal member 21b and measure a distance 41a from the first sensor 41 to a right side 32 of the driver 30 as illustrated in FIG. 2. The first sensor 41 may be, for example, an infrared sensor, and the first sensor 41 may irradiate infrared rays and measure the distance using a reflected infrared signal. The second sensor 42 may be disposed at the other end of the second horizontal member 22b and measure a distance 42a from the second sensor 42 to a left side 31 of the driver 30 as illustrated in FIG. 2. The second sensor 42 may be, for example, an infrared sensor like the first sensor 41, and the distance measurement method may be the same as the method using the first sensor.

Referring back to FIGS. 3 to 9, the controller 50 may be configured to control an overall function of the display apparatus 1 based on an input user command. The controller 50 may be configured to control the display 10 to display a UI which includes, for example, a menu for selecting the degree of curvature of the display 10 by the user, and the controller 50 may be configured to control the driver 30 to adjust the degree of curvature of the display via the deformer 20 to correspond to the degree of curvature of the display 10 selected in the menu.

For example, the controller 50 may be configured to control the display 10 to display UIs which include the curvature selection menus 80a, 80b, 80c, and 80d for selecting one of the plurality of preset curvature values so as to select the degree of curvature of the display 10. The plurality of preset curvature values may include at least a portion of the plurality of curvature values described, for example, in the look-up table illustrated in FIG. 10.

For example, as illustrated in FIG. 3, the controller 50 may be configured to control the display 10 to display the curvature selection menu 80a configured, for example, of a quadrangular image including FLAT and preset curvature values of 4200R, 4600R, 5000R, and the like.

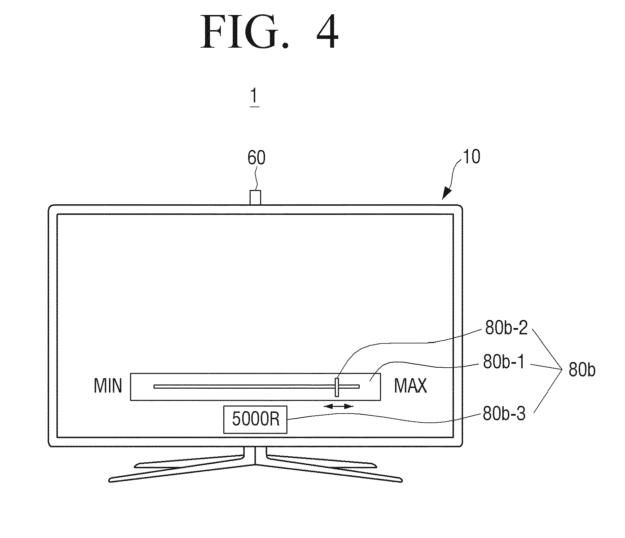

In another example, as illustrated in FIG. 4, the controller 50 may be configured to control control the display 10 to display the curvature selection menu 80b which includes, for example, a slide bar image 80b-1, an adjustment knob image 80b-2, and a curvature indicator 80b-3. In this example, the controller 50 may be configured to control the display 10 to move the adjustment knob image 80b-2 along the slide bar image 80b-1. In response to the adjustment knob image 80b-2 arriving at one of a plurality of positions preset on the slide bar image 80b-1, the controller 50 may be configured to control the display 10 to indicate the curvature value corresponding to the position of the adjustment knob image 80b-2 in the curvature indicator 80b-3. The indication indicating a minimum value MIN may be represented in one outer side of the slide bar image 80b-1 and indication indicating a maximum value MAX may be represented in the other outer side of the slide bar image 80b-1. The indications indicating the minimum value MIN and the maximum value MAX may be referred to in determining the moving direction of the adjustment knob image 80b-2.

The controller 50 may be configured to control the display 10 to display the UIs including the curvature selection menus 80a and 80b, and the user may comfortably immerse himself/herself in viewing by adjusting the curvature of the display 10 even in response to the user being out of a distance of 3 to 4 m suitable for viewing a conventional curved display apparatus.

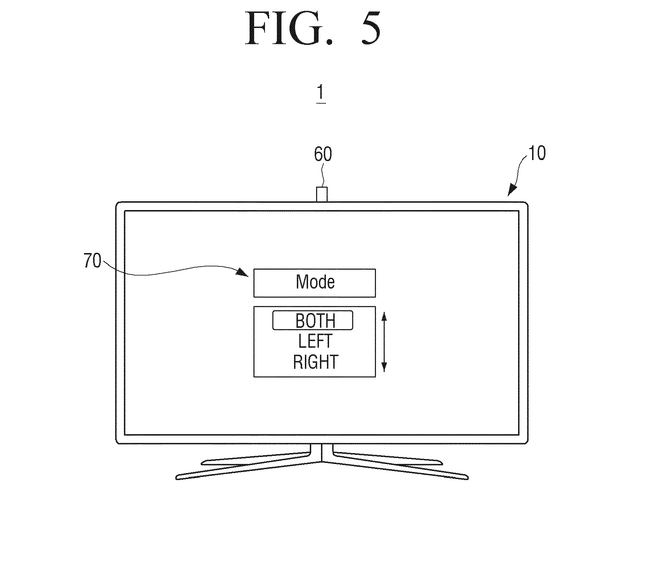

The controller 50 may be configured to control the display 10 to display the UI which further includes the position selection menu 70 for selecting the portion of the display 10 to be curved. For example, as illustrated in FIG. 5, the controller 50 may be configured to control the display 10 to display the UI which includes the position selection menu 70 configured to display, for example, LEFT, RIGHT, BOTH, and the like.

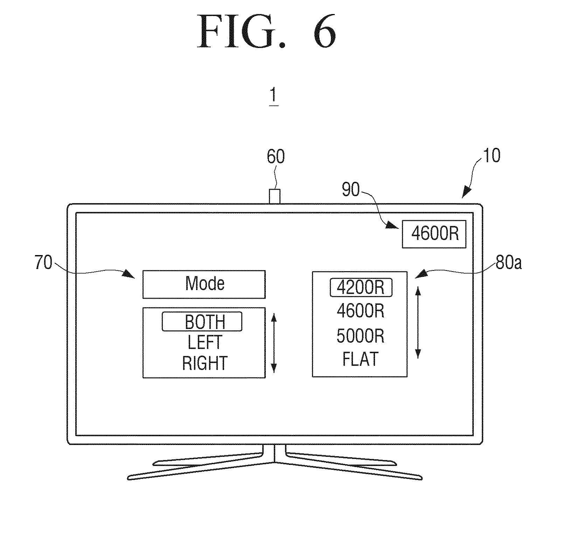

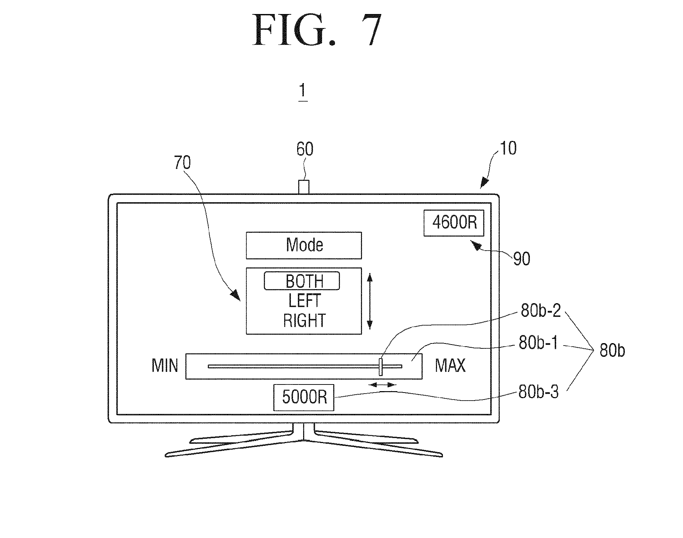

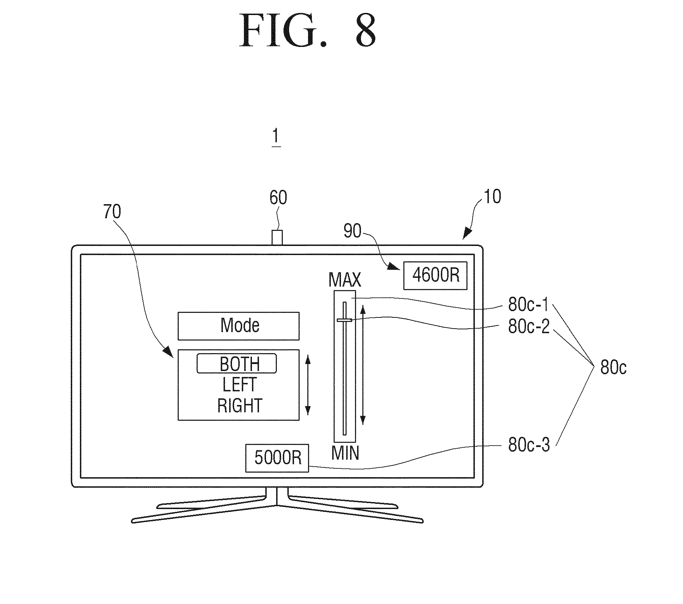

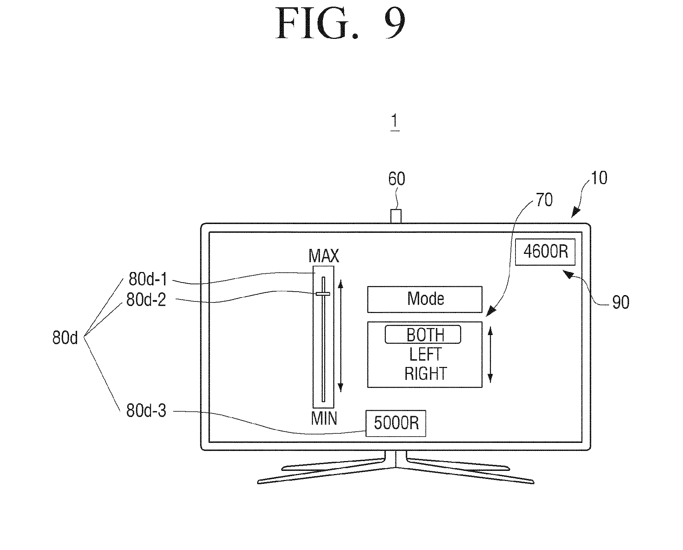

For example, the controller 50 may be configured to control the display 10 to display the position selection menu 70 which is arranged in parallel with the curvature selection menu 80a having a quadrangular image form as illustrated in FIG. 6. In another example, the controller 50 may be configured to control the display 10 to display the curvature selection menu 80b which includes the slide bar image 80b-1, the adjustment knob image 80b-2, and the curvature indicator 80b-3 and is arranged below the position selection menu 70 in parallel with the position selection menu 70 in a horizontal direction as illustrated in FIG. 7. In another example, the controller 50 may be configured to control the display 10 to display the curvature selection menu 80c which includes a slide bar image 80c-1, an adjustment knob image 80c-2, and a curvature indicator 80c-3 and is arranged to the right of the position selection menu 70 in parallel with the position selection menu 70 in a vertical direction as illustrated in FIG. 8. In another example, the controller 50 may be configured to control the display 10 to display the curvature selection menu 80d which includes a slide bar image 80d-1, an adjustment knob image 80d-2, and a curvature indicator 80d-3 and is arranged to the left of the position selection menu 70 in parallel with the position selection menu 70 in the vertical direction as illustrated in FIG. 9.

In response to a region of the display 10 to be curved and a curvature indicating the curved degree of the display 10 being selected on the UIs including, for example, the curvature selection menus 80a, 80b, 80c, and 80d and the position selection menu 70 by the user, a method of controlling the driver 30 through the controller 50 will be described with reference to FIGS. 11 to 13.

In response to a desired curvature value being selected from the curvature selection menus 80a, 80b, 80c, and 80d by the user, and RIGHT for causing the left portion of the display 10 to be curved as illustrated in FIG. 11 being selected in the position selection menu 70 by the user, the controller 50 may be configured to control the driver 30 to move the first horizontal member 21b passing through the driver 30 in the longitudinal direction of the display 10, and the left portion of the display 10 may be curved toward the user as illustrated in FIG. 11. For example, the controller 50 may be configured to control the driver 30 to move the first horizontal member 21b to the left direction in FIG. 11 so that the first rotation member 21a may be rotated in the clockwise direction on the basis of the first hinge 25 which couples the first horizontal member 21b and the first rotation member 21a. In this example, as an angle formed between the first rotation member 21a and the first horizontal member 21b is increased, the first rotation member 21a may press the left portion of the display 10 through the first frame 23, and the left portion of the display 10 may be curved toward the user.

The controller 50 may be configured to compare the moving distance 41a of a part of the deformer 20 detected through the rear sensor 40 and a preset moving distance corresponding to a curvature value selected through the curvature selection menus 80a, 80b, 80c, and 80d, and control the driver 30 to stop the movement of the part of the deformer 20 in response to the detected moving distance 41a being equal to the preset moving distance. For example, the first sensor 41 disposed in the other end of the first horizontal member 21b may measure the moving distance 41a of the first horizontal member 21b. The controller 50 may be configured to select a curvature value of the look-up table which is coincident with the curvature value selected through the curvature selection menus 80a, 80b, 80c, and 80d by the user, compare a preset reference value of the moving distance on the look-up table corresponding to the selected curvature value with the measurement value of the moving distance 41a through the first sensor 41, and control the driver 30 to stop the movement of the first horizontal member 21a in response to the reference value of the moving distance being equal to the measurement value of the moving distance 41a.

In response to a desired curvature value being selected from the curvature selection menus 80a, 80b, 80c, and 80d by the user and LEFT for causing the right portion of the display 10 to be curved as illustrated in FIG. 12 being selected in the position selection menu 70 by the user, the controller 50 may be configured to control the driver 30 to move the second horizontal member 22b passing through the driver 30 in the longitudinal direction of the display 10, and the right portion of the display 10 may be curved. The detailed operation of causing the right portion of the display 10 to be curved is the same as the operation of causing the left portion of the display 10 to be curved through the moving of the first horizontal member 21b other than the rotation of the second horizontal member 22b to the counterclockwise direction.

In response to the portion of the display 10, for example, the left side or the right side of the display 10 being curved, an image may be provided by causing the portion of the display 10 to be curved toward the user located in the part of the display 10 out of the viewing angle.

In response to BOTH being selected in the position selection menu 70 by the user so that the entire display 10 is curved to have a certain curvature, the controller 50 may be configured to control the driver 30 to move the first and second horizontal members 21b and 22b passing through the driver 30 in the longitudinal direction of the display 10, and the entire display 10 may be curved as illustrated in FIG. 13. The detailed operation of causing the display 10 to be entirely curved is the same as the operations of causing the left and the right portion of the display 10 to be curved through the moving of the first and second horizontal member 21b or 22b.

In response to the entire display 10 being curved to a certain curvature as described above, distances to all parts of the display 10 from the eyes of the user are the same. Accordingly, distortion of an image provided from the display 10 may be minimized, the user may comfortably immerse himself/herself in viewing, and the surround effect as if the display 10 covers the surroundings may be provided.

According to an example embodiment, the controller 50 may be configured to receive information for the distance 60a of the viewer from the display 10 which is detected, for example, through the front sensor 60 as illustrated in FIG. 2, determine a curvature value of the display 10 based on the distance 60a to the viewer from the display 10 which is detected through the front sensor 60, and control the display 10 to display the UI further including the optimum curvature menu 90 which displays at least one curvature value closest to the curvature value determined by the controller 50 among the preset curvature values. For example, in response to being determined that the current curvature based on the distance 60a between the display 10 and the viewer exists between two stored curvature values among the curvature values included in the look-up table and differences between each of the two curvature values and the current curvature are slight, the controller 50 may be configured to control the display 10 to display the UI further including the optimum curvature menu 90 which displays both the two curvature values. In this example, the user may select one of the two curvature values, and the difference between two curvature values caused in immersion for the image provided from the display 10 may insignificant. As illustrated in FIGS. 6 to 9, the controller 50 may be configured to arrange the optimum curvature menu 90 near, for example, a corner of a screen of the display 10.

As the controller 50 controls the display 10 to further provide the optimum curvature menu 90, the user may select a curvature in the curvature selection menus 80a, 80b, 80c, and 80d by referring to the optimum curvature menu 90.

According to an example embodiment, in response to at least one curvature value closest to the curvature value based on the distance from the display 10 to the viewer detected through the front sensor 60 being determined by the controller 50, before the operation of providing the curvature selection menus 80a, 80b, 80c, and 80d for selecting the curvature by the user, the controller 50 may be configured to control the driver 30 to cause the display 20 to be curved according to the determined one curvature value without a user command. After the controller 50 controls the driver 30 to cause the display 10 to be curved, the controller 50 may further provide the optimum curvature menu 90 together with the curvature selection menus 80a, 80b, 80c, and 80d and the position selection menu 70. The user may determine the curved degree of the display 10, and select another curvature value different from the curvature value corresponding to the currently provided curved degree.

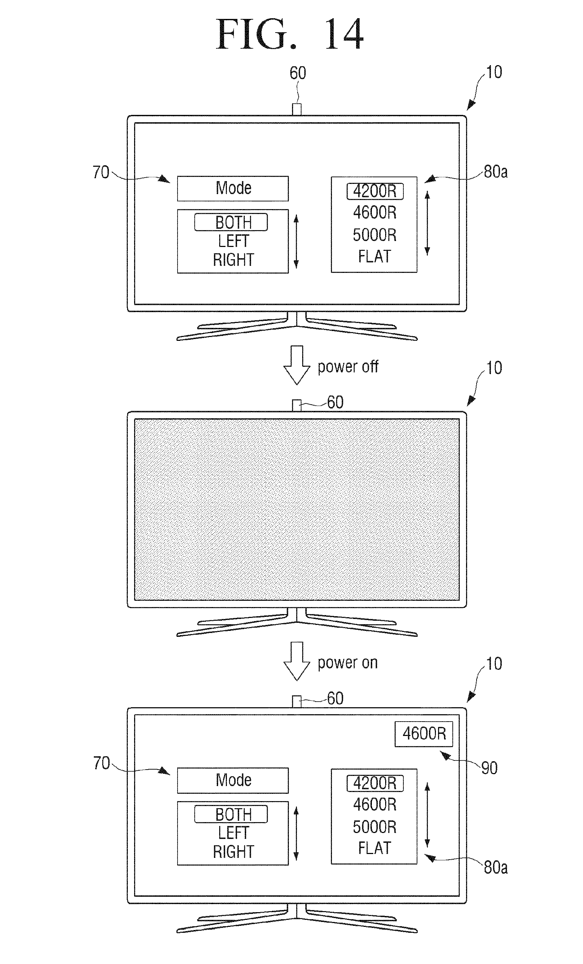

FIG. 14 is a diagram illustrating a method of controlling the display 10 in the display apparatus 1 based on a power-on command or a power-off command according to an example embodiment.

Referring to FIG. 14, in response to the power-off command being input after the operation of changing a curvature of the display 10, the controller 50 may be configured to store curvature information for the display 10 at the point in time when the power-off command is input, and the controller 50 may be configured to control the driver 30 to move the deformer 20 until the display 10 becomes flat.

For example, the controller 50 may store a curvedly deformed region of the display 10 and a curvature value for the curvedly deformed region at the point in time when the power-off command is input. In response to only the curvature value on the curvature selection menus 80a, 80b, 80c, and 80d being selected by the user and a position of a curved portion of the display on the position selection menu 70 not being selected by the user before the power-off command is input, the entire display 10 may be curved. For example, in response to the power-off command being input in a state in which the entire display 10 is curved, the controller 50 may be configured to recognize that BOTH on the position selection menu 70 is selected, and may store a corresponding curvature value. The controller 50 may be configured to store the curvature information, and then control the display 10 to be entirely flat. In response to the power-off command being input while the operation of changing the curvature of the display 10 is performed, the controller 50 may be configured to not store the curvature information for the display 10 at the point of time when the power-off command is input.

In response to the power-on command being input, the controller 50 may be configured to control the driver 30 to cause the display 10 to be curved based on the stored curvature information. For example, the controller 50 may control the driver 30 to cause the display 10 to be curved based on the region of the display 10 to be curved and the curvature value for the region which have been stored. In this example, the controller 50 may be configured to control the display 10 to display the optimum curvature menu 90 which displays at least one curvature value closest to the curvature value based on the distance from the display 10 to the viewer detected through the front sensor 60 so that the user may refer to the optimum curvature based on the position of the user.

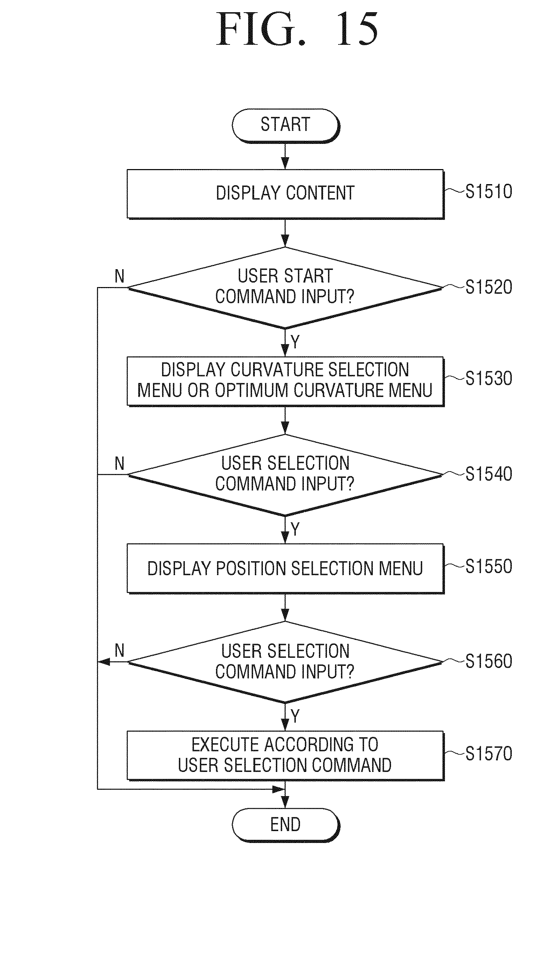

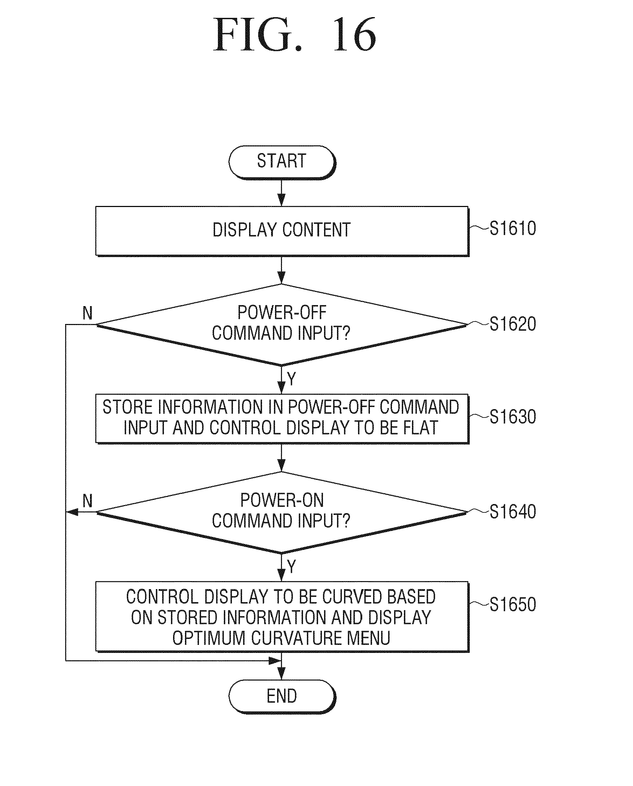

A method of controlling the display apparatus 1 will be described with reference to FIGS. 15 and 16.

FIG. 15 is a flowchart illustrating a method of controlling the display 10 through the display apparatus 1 based on a selection command input of the user according to an example embodiment. First, the display apparatus 1 may display content through the display 10 (S1510).

While the content is displayed, the display apparatus 1 may determine whether or not a user signal is input (S1520).

In response to the user signal being input (S1520-Y), the display apparatus 1 may display the curvature selection menus 80a, 80b, 80c, and 80d and may further display the optimum curvature menu 90 (S1530).

In response to a user selection command for the curvature selection menus 80a, 80b, 80c, and 80d or the optimum curvature menu 90 being input (S1540-Y), the display apparatus 1 may further display the position selection menu 70 (S1550).

In response to a user selection command being input (S1560-Y), the display apparatus 1 may perform a function based on the user selection command. For example, the display apparatus 1 may control the driver 30 to move the deformer 20 (S1570).

FIG. 16 is a flowchart illustrating a method of controlling the display 10 based on an input of a power-on command or a power-off command through the display apparatus 1 according to an example embodiment. First, the display apparatus 1 may display content through the display 10 (S1610).

While the content is displayed, the display apparatus 1 may determine whether or not the power-off command is input (S1620).

In response to the power-off command being input (S1620-Y), the display apparatus 1 may store curvature information in the input of the power-off command, and control the display 10 to be flat (S1630).

In response to the power-on command being input (S1640-Y), the display apparatus 1 may control the display 10 to be curved based on the stored curvature information, and may further display the optimum curvature menu 90 (S1650).

As the position selection menu 70, the curvature selection menus 80a, 80b, 80c, and 80d, and the optimum curvature menu 90 are provided through the display apparatus 1, the user may select the degree of curvature of the display 10 step by step by referring to the optimum curvature value based on the distance 60a from the display 10 to the user, and the user may comfortably immerse himself/herself in viewing without position movement.

The display apparatus 1 may provide an image by controlling a portion of the display 10 to be curved toward the viewer located in the part of the display 10 out of the viewing angle. The display apparatus 1 may reduce and/or minimize distortion of the image provided from the display 10 by causing the distances to all parts of the display 10 from the eyes of the user to be substantially equal through substantially the entire incurvature of the display 10 to the certain curvature, enable the user to comfortably immerse himself/herself in viewing, and provide the surround effect as if the display 10 covers surroundings.

The foregoing example embodiments and advantages are described merely for purposes of example and are not to be construed as limiting the disclosure. The example embodiments can be readily applied to other types of devices. Also, the description of the example embodiments is intended to be illustrative only, and not to limit the scope of the claims, and many alternatives, modifications, and variations will be apparent to those skilled in the art.

## Claims

1. A display apparatus comprising:
a flexible display;
a deformer coupled to a rear surface of the display;
a driver configured to selectively drive the deformer to vary a curvature of the display; and
a controller configured to display a user interface, UI, including a menu for selecting a degree of curvature the display in the display, and to control the driver to correspond to the curved degree of the display selected in the menu.

2. The display apparatus as claimed in claim 1, wherein the menu includes a curvature selection menu for selecting one of a plurality of preset curvature values.

3. The display apparatus as claimed in claim 2, wherein the menu further includes a position selection menu for selecting a portion of the display to be curved.

4. The display apparatus as claimed in claim 2 or 3, further comprising a front sensor configured to detect a distance to a viewer from the display,
wherein the menu includes an optimum curvature menu which displays a curvature value determined through the controller based on the distance detected through the front sensor, and at least one curvature value closest to the determined curvature value among the plurality of preset curvature values displayed through the curvature selection menu.

5. The display apparatus as claimed in any one of claims 2 to 4, further comprising a rear sensor configured to detect a moving distance of the deformer,
wherein the controller is configured to compare the moving distance of the deformer detected through the rear sensor with a preset moving distance corresponding to the curvature value selected through the curvature selection menu and to control the driver to stop a movement of the deformer in response to the detected moving distance being equal to the preset moving distance.

6. The display apparatus as claimed in claim 5, wherein the menu further includes a position selection menu for selecting a portion of the display to be curved, and
the controller is configured to deform a curvature for the portion of the display selected in the position selection menu.

7. The display apparatus as claimed in any one of claims 1 to 6, wherein, the controller is arranged to store curvature information of the display at the time of receiving the power-off command in response to a power-off command being input, and the controller is configured to control the driver to move the deformer until the display is flat.

8. The display apparatus as claimed in claim 7, wherein, the controller is configured to control the driver so that the display is curved based on the curvature information stored at the time of receiving the power-off command in response to a power-on command being input,.

9. The display apparatus as claimed in claim 2 or any previous claim when dependent on claim 2, wherein the curvature selection menu includes:
a slide bar image;
an adjustment knob image which is configured to move along the slide bar image; and
a curvature indicator which is configured to display a curvature value corresponding to a position of the adjustment knob image among the plurality of preset curvature values based on a movement of the adjustment knob image along the slide bar image.

10. A method for controlling a display apparatus, comprising:
displaying a curvature selection menu for selecting one of a plurality of preset curvature values to select a degree of curvature of a display;
selecting one of the plurality of preset curvature values through the curvature selection menu; and
changing a curvature of the display to correspond to the curvature value selected through the curvature selection menu.

11. The method as claimed in claim 10, further comprising displaying a position selection menu for selecting a portion of the display to be curved.

12. The method as claimed in claim 10 or 11, further comprising: before the displaying of the curvature selection menu,
detecting a distance from the display to a viewer;
determining a curvature value of the display based on the detected distance from the display to the viewer; and
displaying at least one curvature value closest to the determined curvature value among the plurality of preset curvature values displayed through the curvature selection menu.

13. The method as claimed in any one of claims 11 to 12, wherein the changing of the curvature of the display includes:
moving a deformer configured to deform the curvature of the display through a driver so that the selected portion of the display has the selected curvature value; detecting a moving distance of the deformer; and
comparing the detected moving distance of the deformer with a preset moving distance corresponding to the curvature value selected through the curvature selection menu and stopping a movement of the deformer in response to the detected moving distance being equal to the preset moving distance.

14. The method as claimed in any one of claims 10 to 13, further comprising: in response to receiving a power-off command after the changing of the curvature of the display,
storing curvature information for the degree of curvature of the display; and
moving a deformer through a driver so that the display is flat.

15. The method as claimed in claim 14, further comprising, in response to a power-on command being received after the moving of the deformer so that the display is flat, moving the deformer through the driver so that the display is curved based on the curvature information stored when the input of the power-off command was received.
